# EUROPEAN PATENT SPECIFICATION

(11) **EP 0 599 997 B1**
(45) Date of publication and mention of the grant of the patent: **18.11.1998**
(21) Application number: 92918579.1
(22) Date of filing: 26.08.1992
(51) Int. Cl.: B62D 25/10, B62D 33/06

(54) **BONNET ARRANGEMENT FOR COMMERCIAL VEHICLE**
MOTORHAUBE FÜR NUTZFAHRZEUGE
CAPOT DE VEHICULE COMMERCIAL

(30) Priority: 26.08.1991 SE 9102443
(43) Date of publication of application: 08.06.1994
(73) Proprietor: AB VOLVO, 405 08 Göteborg (SE)
(72) Inventor: BODIN, Jan-Olof, S-441 65 Alingsas (SE); DACH, Ingemar, S-422 47 Hisings Backa (SE); NILSSON, Nils, S-411 20 Göteborg (SE); KJELLBERG, Sture, S-517 00 Bollebygd (SE)
(74) Representative: Mossmark, Anders
(86) International application number: SE9200594
(87) International publication number: WO9303948

(56) References cited:
- DE-A- 3 117 791
- FR-A- 1 302 645
- SE-B- 406 304
- US-A- 3 419 099

## Description

### Technical field:

The present invention relates to a bonnet arrangement for commercial vehicles having a driver's cab, which is displaceably carried on the frame of the vehicle so, that the driver's cab is able to perform damped movements of resilience relative to the vehicle frame, whereby the bonnet at its front region presents a pivot support for tiltable attachment of the bonnet to the vehicle frame whereby the bonnet and the driver's cab are independently carried by, and attached to, the vehicle frame by means of the bonnet being releasably secured to the vehicle frame via securing devices arranged at a distance from the pivot support, at each side of the bonnet in the region of the rear edge of the bonnet.

### Background of the invention:

In order to meet increasing demands regarding the working environment for professional lorry drivers, it is becoming increasingly common that the driver's cab be resiliently supported relative to the vehicle frame. For commercial vehicles in which the motor is positioned in front of the driver's cab, high demands are required of the bonnet which, in conventional constructions, has up until now had its rear edge attached to the driver's cab, since the resilient movements must be accommodated by the attachment components between the bonnet and the cab or by the forward attachment of the bonnet to the vehicle frame where the bonnet is normally rotatably attached to the frame. From US 3,419,099 it is prior known to secure the bonnet directly to the frame. However, in this case the driver's cab is rigidly supported by the frame, involving no motions between the bonnet and the cab.

### Summary of the invention:

The object of the present invention is to solve the above mentioned problem with a simple and efficient arrangement.

Said object is achieved by means of a bonnet arrangement which is characterized in that the cab is allowed to perform movements of resilience relative to the vehicle frame and that the bonnet is located with a space between the rear edge of the bonnet and the driver's cab, and that said space being scaled by means of a sealing strip which is felxible, providing sealing qualites whereby the cab is allowed to perform movements of resilience relative to the vehicle frame without transmitting movements of the cab to the bonnet.

### Brief description of the drawings:

The invention will be described in greater detail in the following by way of example only, and with reference to the attached drawings in which
- Fig. 1: shows schematically a side view of the front part of a commercial vehicle,
- Fig. 2: is a perspective view of the front part of the commercial vehicle,
- Fig. 3: shows an example of a pivot support for a bonnet of a commercial vehicle,
- Fig. 4: shows in a partially sectioned perspective view a region of the bonnet and cowl of the driver's cab, and
- Fig. 5: shows an example of a securing arrangement for the bonnet.

### Best mode of carrying out the invention:

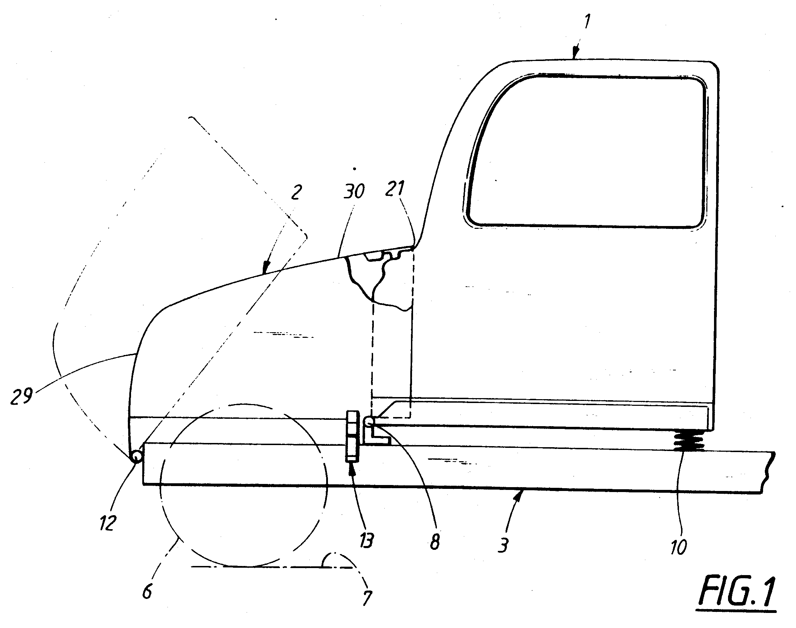

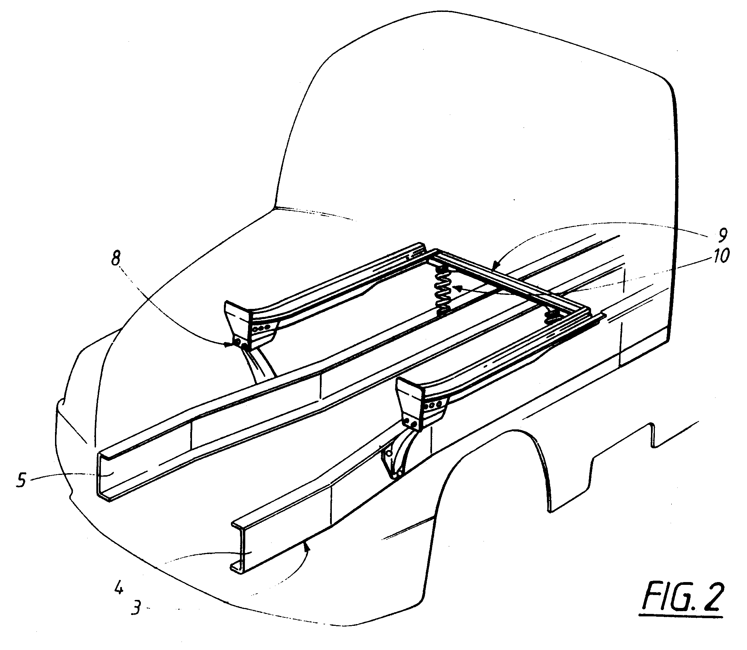

As is evident from Figs. 1 and 2, both the driver's cab 1 and the bonnet 2 are carried on the frame 3 of the vehicle. The principle components of the frame consist of two longitudinally extending frame members 4, 5 positioned at a distance from each other. By means of a not shown front suspension assembly, the vehicle frame 3 is resiliently supported with respect to the two front wheels 6, which in turn are in contact with a surface 7 such as a road way. In order to absorb irregularities in the surface 7 and other vibrations through the vehicle frame 3, the driver's cab 1 is resiliently supported on the vehicle frame. In the shown example the driver's cab is pivotally supported to the vehicle frame at the front edge of the vehicle cab by means of a pivot support 8 which consists of two pivot hinges, by means of which the vehicle cab is supported on a substantially U-shaped framework 9. The resilient support is achieved in the shown example primarily by means of the driver's cab, via its frame work 9, being resiliently supported at its rear edge by a spring arrangement 10. This arrangement is similarly arranged on the vehicle frame 3, for example by means of two spring members between the frame work and respective frame members 4, 5. A certain elasticity in the support can also be achieved at the front edge by providing the pivot supports with resilient bushes.

The commercial vehicle in the shown example is arranged with the motor in front of the driver's cab 1. The motor is accordingly covered by the bonnet 2 which surrounds the motor forwardly and on both sides and connects with the cowl region 11 of the driver's cab. At its front lower edge, the bonnet is pivotally supported to the vehicle frame by means of a pivot link 12, whereby the bonnet can be moved between a closed position, which is shown by solid lines in Fig. 1, to a open position indicated by dotted lines. In the closed position, the bonnet 2 is fastened to the vehicle frame 3 by means of securing arrangements 13 arranged on either side of the vehicle, which shall be described in greater detail below.

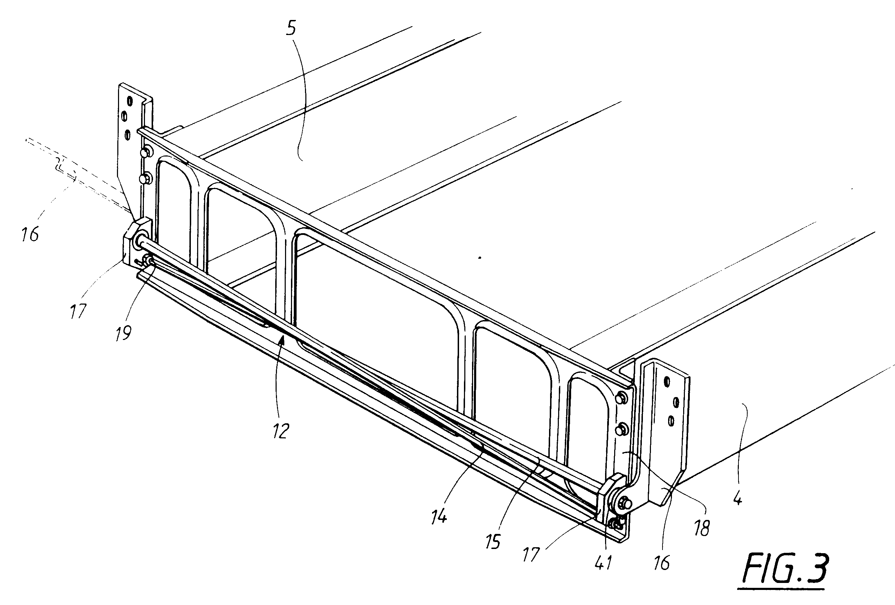

Fig. 3 shows in greater detail an example of the pivot support 12 for the bonnet, where the pivot hinge is in the form of two crossed torsion bars 14, 15 which are pre-tensioned such that they apply a torque to the bonnet which counteracts the bonnet's own weight and thereby assists in the opening and closing of the bonnet. The torsion bars 14 and 15 are, in a known manner, fixedly secured at one end to a pivotable bracket 16 for each bar, and to which brackets the not shown bonnet is fixedly secured. Furthermore, the same end of each bar is resiliently supported for rotation within a fixed bearing housing 17 which is attached to a fixed bracket 18 which extends between, and is attached to, the two frame members 4, 5. At its other end 19 each torsion bar is fixedly secured to the other bearing housing at an eccentrically located point, i.e. outside of the pivot axis. The open position of the pivotable bracket 16 is shown on the one side by dotted lines. The resilient support is achieved in the shown example by means of each bearing housing 17 being provided with a rubber bushing between the housing and the bar 14, 15 passing therethrough.

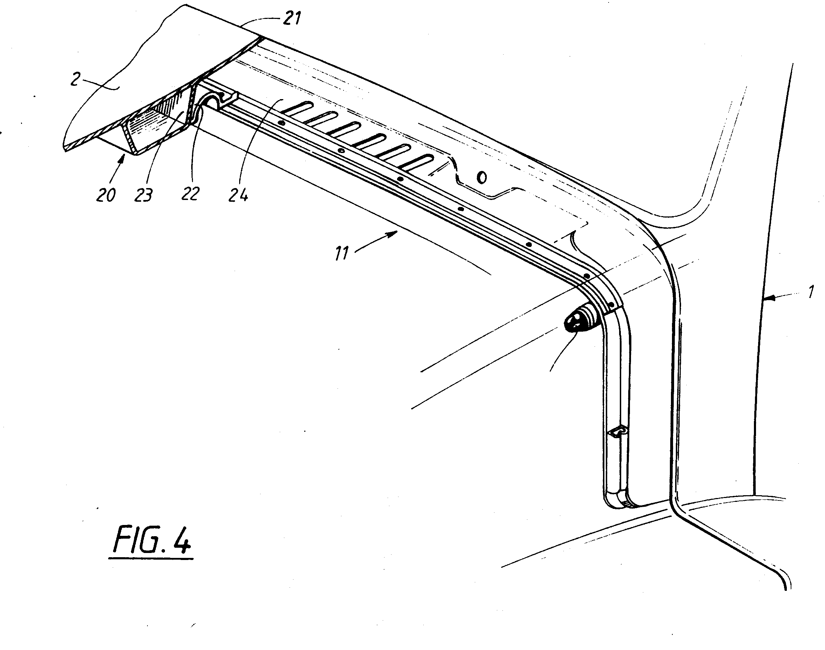

In Fig. 4 there is shown the connection of the bonnet 2 to the driver's cab, more exactly to the cowl region 11, i.e. the bulkhead between the driver's cab and the engine compartment. Essential for the present invention is that the bonnet 2 is not rigidly secured to the driver's cab, but rests thereagainst so that the driver's cab is allowed to move relative to the bonnet. The connection between the cab and the bonnet is so arranged, however, that rain water and the like cannot run into the engine compartment. In the shown example the connection is achieved with the aid of a box girder 20 arranged at a distance from the rear edge 21 of the bonnet which overlappingly projects above the cowl region 11. Connected to the bonnet there is arranged a sealing strip 22 on one wall region 23 of the box girder 20. The strip 22 is very flexible whilst still providing sealing qualities so that the movement of the driver's cab is not transmitted to the bonnet. The bonnet is so arranged that, in principle it does not need to have any direct contact with the driver's cab or cowling other than via the sealing strip 22. Thus, the rear edge 21 and associated region of the bonnet presents a gap between the upwardly facing region 24 of the cowl 11 so that unnecessary abrasion, with resulting paint damage, is avoided. In the corners of the cowl region 11 there are arranged damping bodies 25 of elastic material so that, in the bonnets' closed position, they have a stabilizing effect thereupon, particularly in a transverse direction, in order to avoid for example large oscillating amplitude with the risk of self oscillation.

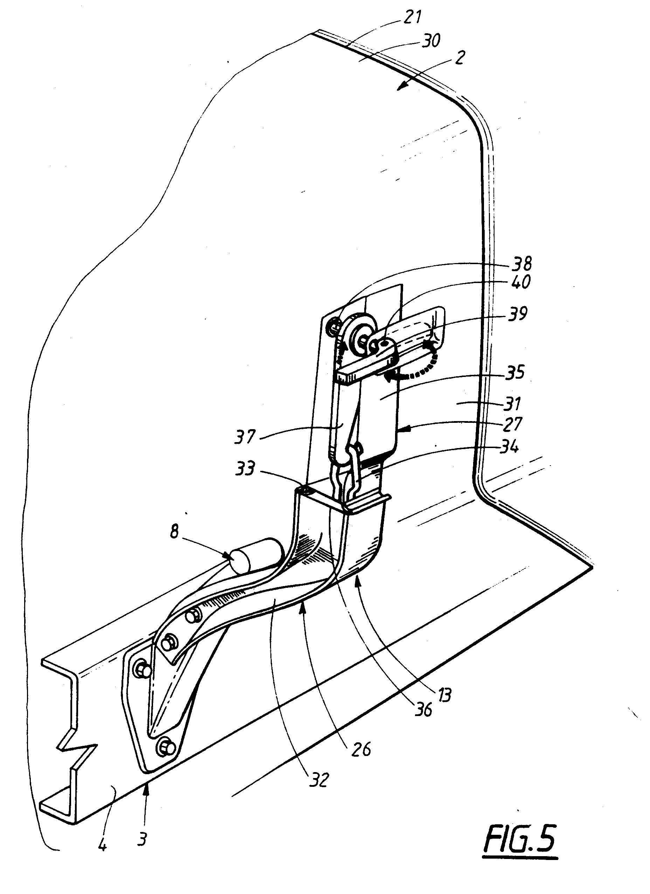

According to the invention, securing of the bonnet 2, as mentioned above, is effected by securing the bonnet in the region of its rear edge to the vehicle chassis and not by means of any attachment to the driver's cab. The securing arrangement 13 is advantageously so designed that a relatively solid attachment to the vehicle frame 3 is attained, suitably so that the securing arrangement applies a pretensioned force which acts so as to pull the bonnet downwardly in a direction towards the vehicle frame. According to the invention, two securing arrangements are arranged, one on either side of the bonnet. The bonnet presents not only a front region 29 and an upper region 30 but also two side regions 31, whereby the upper region 30 and the two side regions 31 are rearwardly delimited by the rear edge 21 of the bonnet. In relation to the pivot support 12, the securing arrangements 13 are positioned at the opposite end of the bonnet 2, i.e. towards the bonnet's rear edge, though in practice it is advantageous to locate the arrangements at a distance from the rear edge. Each of the securing arrangements 13 presents a frame part 26 with a bracket 32 which is affixed to one member 4 of the vehicle frame and presents an upwardly facing support surface 33 and a ring 34 connected to the support surface and fixed to the bracket 32. A bonnet portion 27 of the securing arrangement similarly presents a bracket 35 on the bonnet, preferably attached to the reinforcement girder 20, which presents a downwardly directed support surface 36 which is intended to abut the upwardly facing support surface 33 of the frame bracket 32 in the closed position for the bonnet, as shown in Fig. 5. A hook element 37 is arranged on the bonnet bracket 35 and is adapted to engage the ring 34 and, via an eccentric arrangement, is pivotally carried on an axle rod 38. Rotation is achieved by means of an operating lever 39 which is accessible from the outer side of the bonnet within a recessed opening in the bonnet, whilst remaining parts of the securing arrangement 13 are hidden and protected underneath the bonnet. The operating handle 39, as well as being rotatable about the axle rod 38, is also rotatable about its attachment 40 to the axle rod for displacement to an outwardly folded operational position and an inwardly folded storage position which is shown in dotted lines. From the shown operational position, a released position is reached by turning the operating lever in a clockwise direction, whereby the hook element 37 is downwardly displaced with respect to the shown engaged position and moved to the side of the ring 34 at the same time that the hooked end 41 maintains a greater distance from the rotational axis of the axle rod 38. Displacement to the secured position occurs by rotating the operating lever 39 anticlockwise, whereby the hook element 37 is brought to rotate anticlockwise and the hooked end 41 is inserted into the ring 34, whereafter, because of the eccentricity, the hook element 37, during continued rotation of the operating lever 9 to an end position, is lifted to thereby apply a pre-tensioning force so that the support surfaces 33, 36 on the two brackets 32, 35 are pressed together to thereby impart a stable and playless securement. Preferably, and thus shown in the drawings, the contact surfaces are not flat, but instead are formed so that a shaped engagement is achieved which provides additional transverse stability to the attachment.

By means of the above described securing arrangement with the bonnet 2 being secured by two securing arrangements towards the rear edge of the bonnet and directly to the vehicle chassis 3, and independent of the driver's cab 1, the driver's cabs' suspension can be designed for optimal driver comfort without regard to influences from the bonnet. The bonnet is securely attached to the frame, whereby the bonnet can be constructed so as to fulfil its primary functions.

The invention is not restricted to the embodiments described above and shown in the drawings, but can be varied in within the scope of the following claims. For example, the securing arrangements 13 can be formed in a different manner than that shown in the chosen embodiment. For example, a so-called tensioning clamp of the type which is used for fastening drop-sides on load platforms can be selected.

## Claims

1. Bonnet arrangement (2) for commercial vehicles having a driver's cab (1) which is displaceably carried on the frame (3) of the vehicle so, that the driver's cab (1) is able to perform damped movements of resilience relative to the vehicle frame, whereby the bonnet at its front region presents a pivot support (12) for tiltable attachment of the bonnet (2) to the vehicle frame, whereby the bonnet (2) and the driver's cab (1) are independently carried by, and attached to, the vehicle frame (3) by means of the bonnet being releasably secured to the vehicle frame via securing devices (13) arranged at a distance from the pivot support (12), at each side of the bonnet (2) in the region of the rear edge (21) of the bonnet,
**characterized** in that the cab is allowed to perform movements of resilience relative to the vehicle frame, that the bonnet (2) is located with a space between the rear edge (21) of the bonnet and the driver's cab, and that said space being sealed by means of a sealing strip (22) which is flexible, providing sealing qualities, whereby the cab is allowed to perform said movements of resilience relative to the vehicle frame without transmitting movements of the cab to the bonnet.

2. Arrangement according to claim 1,
**characterized** in that each of the securing devices (13) consists of a frame part (26) attached to the vehicle flame (3) and a bonnet part (35) attached to the bonnet (2), with both parts presenting engaging abutting faces (33, 34), and a tensioning arrangement (34, 37, 38, 39) adapted to pretension the bonnet part against the frame part in a secured position of the bonnet.

3. Arrangement according to claim 2,
**characterized** in that the tensioning arrangement (34, 37, 38, 39) is in the form of, on the one hand, a hook element (37) arranged on the bonnet part (35) and displaceable via an operating lever (39) between a pre-tensioning position and a released position, and on the other hand, a ring (34) mounted on the frame part (26) into which the hook element is intended to engage.

## Patentansprüche

1. Motorhaubenanordnung (2) für Nutzfahrzeuge mit einem Führerhaus (1), welches entfernbar auf einem Fahrzeugrahmen (3) des Fahrzeugs derart getragen ist, daß das Führerhaus (1) in der Lage ist, gedämpfte Federbewegungen relativ zu dem Fahrzeugrahmen durchzuführen, wobei die Motorhaube in ihrem Vorderbereich eine Schwenklagerung (12) für das kippbare Anbringen der Motorhaube (2) an den Fahrzeugrahmen (3) aufweist, wobei die Motorhaube (2) und das Führerhaus (1) unabhängig von einander von dem Fahrzeugrahmen (3) getragen werden und an diesen angebracht sind, indem die Motorhaube lösbar an den Fahrzeugrahmen über eine Festhalteeinrichtung (13) befestigt ist, die beabstandet von der Schwenklagerung (12) an jeder Seite der Motorhaube (2) im Bereich des hinteren Randes (21) der Motorhaube angebracht ist,
dadurch gekennzeichnet,
daß das Führerhaus zur Durchführung von Federbewegungen relativ zu dem Fahrzeugrahmen fähig ist, daß die Motorhaube (2) mit einem Abstand zwischen dem hinteren Rand (21) der Motorhaube und dem Führerhaus angeordnet ist, und daß der Abstand mittels eines abdichtenden flexiblen Streifens (22), welcher Abdichteigenschaften aufweist, abgedichtet wird, wobei das Führerhaus in der Lage ist, die Federbewegung relativ zu dem Fahrzeugrahmen, ohne daß Bewegungen des Führerhauses auf die Motorhaube übertragen werden, durchzuführen.

2. Anordnung nach Anspruch 1,
dadurch gekennzeichnet,
daß jede der Festhaltevorrichtungen (13) aus einem Rahmenteil (26), das an den Fahrzeugrahmen (3) angebracht ist, und aus einem Motorhaubenteil, das an die Motorhaube (2) angebracht ist, wobei beide Teile ineinandergreifende, aneinander stoßende Flächen (33, 34) aufweisen und aus einer Vorspannungsanordnung (34, 37, 38, 39) besteht, die zur Vorspannung des Motorhaubenteils gegen das Rahmenteil in der geschlossenen Stellung der Motorhaube ausgelegt ist.

3. Anordnung nach Anspruch 1,
dadurch gekennzeichnet,
daß die Vorspannungsanordnung (34, 37, 38, 39) einerseits als ein hakenförmiges Bauelement ausgebildet ist, das an dem Motorhaubenteil (35) angeordnet ist und über einen Bedienhebel (39) zwischen einer Vorspannungsposition und einer gelösten Position verstellbar ist, und andererseits als ein an dem Rahmenteil (26) ausgebildeter Ring (34) ausgebildet ist, in welchen das hakenförmige Bauelement in Eingriff bringbar ist.

## Revendications

1. Ensemble (2) à capot destine à des véhicules commerciaux ayant une cabine (1) de conducteur qui est supportée afin qu'elle soit mobile sur le châssis (3) du véhicule et que la cabine (1) du conducteur puisse effectuer des mouvements amortis élastiquement par rapport au châssis du véhicule, si bien que le capot placé dans la région avant présente un support formant pivot (12) de fixation pivotante du capot (2) sur le châssis du véhicule, et que le capot (2) et la cabine (1) du conducteur sont supportés indépendamment par le châssis du véhicule (3) et fixés à celui-ci, le capot étant fixé temporairement au châssis du véhicule par des dispositifs (13) de fixation placés à distance du support formant pivot (12), de chaque côté du capot (2) dans la region du bord arrière (21) du capot,
caractérisé en ce que la cabine peut effectuer des mouvements élastiques par rapport au châssis du véhicule, en ce que le capot (2) est monté avec un espace compris entre le bord arrière (21) du capot et la cabine du conducteur, et en ce que ledit espace est fermé de manière étanche par une bande d'étanchéité (22) qui est flexible et qui donne des qualités d'étanchéité, si bien que la cabine peut effectuer élastiquement ces mouvements par rapport au châssis du véhicule sans transmettre les mouvements de la cabine au capot.

2. Ensemble selon la revendication 1, caractérisé en ce que chacun des dispositifs de fixation (13) est formé d'une partie (26) de châssis fixée au châssis du véhicule (3) et d'une partie de capot (35) fixée au capot (2), les deux-parties ayant des faces de coopération par butée (33, 34) et un ensemble de tension (34, 37, 38, 39) destiné à appliquer une tension préalable à la partie de capot vers la partie de châssis en position fixe du capot.

3. Ensemble selon la revendication 2, caractérisé en ce que l'ensemble de tension (34, 37, 38, 39) est sous forme d'une part d'un élément de crochet (37) placé sur la partie de capot (35) et mobile par l'intermédiaire d'un levier de manoeuvre (39) entre une position de tension préalable et une position libérée, et d'autre part un anneau (34) monté sur la partie de châssis (26) et dans lequel l'élément de crochet est destiné a pénétrer.
